# FASCICULE DE BREVET EUROPEEN

(11) **EP 2 165 155 B1**
(45) Date de publication et mention de la délivrance du brevet: **04.04.2018**
(21) Numéro de dépôt: 08761396.4
(22) Date de dépôt: 27.06.2008
(51) Int. Cl.: G01C 21/20, G01C 21/00

(54) **DISPOSITIF D'ASSISTANCE A LA NAVIGATION D'UNE PERSONNE**
EINRICHTUNG ZUM HELFEN BEI DER NAVIGATION EINER PERSON
DEVICE FOR ASSISTING IN THE NAVIGATION OF A PERSON

(30) Priorité: 12.07.2007 FR 0705055
(43) Date de publication de la demande: 24.03.2010
(73) Titulaire: Commissariat à l'Énergie Atomique et aux Énergies Alternatives, 75015 Paris (FR)
(72) Inventeur: ALEXANDRE, Jean-Marc, F-92160 Antony (FR); LAMY-PERBAL, Sylvie, F-92290 Chatenay-Malabry (FR); GELIN, Rodolphe, F-75013 Paris (FR)
(74) Mandataire: Lucas, Laurent Jacques
(86) Numéro de dépôt international: PCT/EP2008/058237
(87) Numéro de publication internationale: WO 2009/007256

(56) Documents cités:
- US-A1- 2003 179 133
- US-A1- 2007 018 890
- US-B1- 6 323 807
- BALACHANDRAN W ET AL: "Visual odometer for pedestrian navigation" IEEE TRANSACTIONS ON INSTRUMENTATION AND MEASUREMENT, IEEE SERVICE CENTER, PISCATAWAY, NJ, US, vol. 52, no. 4, 1 août 2003 (2003-08-01), pages 1166-1173, XP011101104 ISSN: 0018-9456
- GOLDING A R ET AL: "Indoor navigation using a diverse set of cheap, wearable sensors" WEARABLE COMPUTERS, 1999. DIGEST OF PAPERS. THE THIRD INTERNATIONAL SY MPOSIUM ON SAN FRANCISCO, CA, USA 18-19 OCT. 1999, LOS ALAMITOS, CA, USA,IEEE COMPUT. SOC, US, 18 octobre 1999 (1999-10-18), pages 29-36, XP010360101 ISBN: 978-0-7695-0428-5

## Description

La présente invention concerne un dispositif d'assistance à la navigation d'une personne, aussi bien à l'intérieur qu'à l'extérieur d'un bâtiment.

Dans certains cas, il est nécessaire de guider une personne dans son déplacement à l'intérieur d'un bâtiment ou à l'extérieur. En particulier l'aide à la navigation des personnes aveugles dans les lieux publics devient impératif.
Le problème technique peut être résolu en milieu extérieur par l'utilisation de signaux GPS. De nombreux systèmes de navigation existent dans le commerce, aussi bien pour équiper des automobiles que des randonneurs. A l'intérieur d'un bâtiment il n'est plus possible d'utiliser les signaux GPS. Les solutions actuelles ne sont pas satisfaisantes. Deux types de solutions existent. Les solutions d'un premier type sont basées sur l'utilisation de balises de localisation. Les autres solutions sont basées sur une reconnaissance des lieux.
En ce qui concerne les systèmes à balises, il existe des solutions implantées à titre expérimental dans des lieux publics. Ces systèmes utilisent des bornes de localisation. En intégrant un grand nombre de balises de référence et en appliquant les méthodes connues de trilatération, de triangulation ou méthodes des hyperboles, on peut localiser un objet et ensuite proposer une navigation. Cependant ces méthodes exigent un équipement complémentaire très important des bâtiments et entraînent donc un coût d'installation et de maintenance qui pénalise ces systèmes. A titre d'exemple, une solution à base de balises RFID impose d'établir des bornes tous les cinq mètres dans les couloirs et les stations souterrains du métro, ce qui n'est pas envisageable financièrement.
Dans le cas des systèmes basés sur la reconnaissance des lieux, différentes solutions existent, elles sont pour la plupart issues de la robotique. Certaines utilisent des centrales inertielles. Ces centrales incluent des capteurs de type accéléromètres, gyromètres. Par fusion de données entre ces capteurs, on peut reproduire l'orientation en trois dimensions de la centrale. Cependant pour les centrales inertielles destinées à une utilisation « grand public », les mesures effectuées présentent une dérive temporelle importante rendant impossible une localisation absolue. D'autres solutions sont pratiquées dans le domaine de la vision. La fonction de localisation peut dans ces cas être assurée par les images d'une caméra par l'utilisation de techniques appelées SLAM selon l'expression anglo-saxonne « Simultaneous Localization And Mapping ». Cependant l'ensemble des méthodes basées sur la vision sont actuellement peu fiables et elles sont notamment sensibles à des variations dans la scène captée telles que par exemple les changements de luminosité, les objets déplacés ou encore les angles de vue différents. Elles nécessitent par ailleurs une grande quantité de calculs. De plus, il faut prévoir l'utilisation d'une caméra portée par la personne à localiser et à guider, ce qui nuit à la discrétion du dispositif. Enfin, d'autres solutions encore utilisent un laser. Une nappe de laser en deux dimensions permet de mesurer selon un angle d'environ 180° la distance par rapport aux obstacles. L'image obtenue est ensuite recalée par rapport au plan du bâtiment dans lequel se trouve l'objet ou la personne à localiser. Ce recalage permet de repositionner cet objet dans la scène. Ce principe, maintenant couramment utilisé dans l'industrie, est inadapté pour la présente application de localisation. En effet, la présence d'autres personnes, considérées par le laser comme des obstacles, perturbe la mesure et empêche la localisation. D'autre part, les systèmes de nappe laser ne sont pas encore suffisamment miniaturisés pour être facilement portés et ils ne sont pas discrets. Par ailleurs, ils sont d'un coût élevé.

Un article de Y.Tadokoro, S.Takuno et Y.Shinoda « Portable Traveling Navigation System for the Blind and its Application to Traveling Training System » Proceedings of the First Joint BMES/EMBS Conference, Advancing Technoloy oct. 1999, Atlanta, page 589 décrit un système de navigation portable comprenant un calculateur avec en mémoire le trajet prévu pour une destination, des capteurs de mouvement et une IHM sonore. Le calculateur calcule la distance parcourue et la direction de mouvement, les compare avec le trajet prévu, et l'IHM donne des indications à l'utilisateur. Cependant la solution décrite dans cette publication ne permet pas de corriger les dérives du trajet calculé par rapport au trajet réel.
Une demande de brevet WO 2005/080917 divulgue un système pour déterminer le trajet suivi par un piéton. Ce système comprend trois capteurs inertiels attachés sur un utilisateur. Il nécessite une calibration pour chaque utilisateur. Le document US 2003/179133 A1 divulgue un dispositif d'assistance à la navigation d'une personne, la personne étant équipée de ce dispositif qui utilise un GPS. Le document US 2007/018890 A1 divulgue un dispositif d'aide à la navigation équipant une personne, le dispositif effectuant un apprentissage des lieux.
Un but de l'invention est de pallier les inconvénients précités, tout en permettant notamment d'éviter l'ajout d'équipements complémentaires à l'intérieur des bâtiments. A cet effet, l'invention a pour objet un dispositif d'assistance à la navigation d'une personne selon la revendication 1, équipant cette personne et comportant au moins :
- un calculateur comprenant en mémoire une carte numérisée du lieu dans lequel le trajet de la personne est prévu entre un point de départ et un point d'arrivée, un programme de localisation ;
- une interface homme-machine reliée au calculateur ;
- un ensemble de capteurs portés par la personne, relié au calculateur, les capteurs délivrant des informations sur les mouvements de la personne ;
le programme de localisation effectuant un traitement des signaux provenant des capteurs et de l'interface et effectuant la fusion des données fournies par la carte numérisée et les informations issues des capteurs portés par la personne et de l'interface, puis calculant à partir de ces données la localisation relative de la personne, et cela sans recours ni à un pré-équipement des lieux (GPS, RFID,...), ni à un apprentissage préalable de l'environnement.
Un programme de navigation peut alors calculer par exemple le chemin à parcourir par la personne à partir de la localisation calculée précédemment et fournir les informations nécessaires à la navigation de la personne à l'aide de l'interface homme-machine.
Un capteur au moins est par exemple une centrale inertielle.

Le calcul du chemin à parcourir est par exemple mis à jour en fonction d'objectifs intermédiaires du trajet atteints identifiés, ces objectifs intermédiaires étant repérés sur la carte numérisée.
L'objectif atteint peut être identifié par un mouvement caractéristique de la personne détecté par au moins un capteur (observé par exemple sur la signature du signal d'un capteur).
L'objectif atteint peut aussi être identifié par une information fournie à l'interface par la personne.

Avantageusement, le dispositif met par exemple en oeuvre un processus itératif en fonction du renouvellement des objectifs intermédiaires à atteindre tout au long du trajet,
- l'objectif à atteindre étant défini ;
- dans une première étape l'estimation du chemin ainsi que la correction éventuelle de la trajectoire sont calculés ;
- dans l'étape suivante, si l'objectif est atteint un nouvel objectif à atteindre est défini, si l'objectif n'est pas atteint une estimation probabiliste de la position est effectuée puis un nouvel objectif à atteindre est défini.

D'autres caractéristiques et avantages de l'invention apparaîtront à l'aide de la description qui suit, faite en regard de dessins annexés qui représentent :
- la figure 1, une illustration du principe d'utilisation d'un dispositif selon l'invention ;
- la figure 2, une présentation d'étapes itératives mises en oeuvre par un dispositif selon l'invention ;
- la figure 3, une illustration d'un enchaînement possible des étapes précitées ;
- la figure 4, une présentation des principaux blocs fonctionnels possibles d'un dispositif selon l'invention.

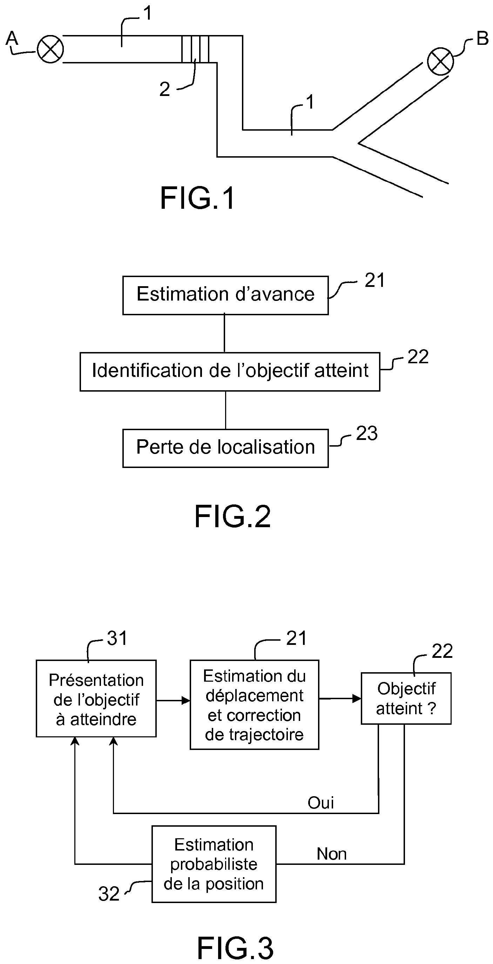

La figure 1 illustre le principe d'utilisation d'un dispositif selon l'invention. Un utilisateur indique via une interface homme-machine, IHM, adaptée l'endroit où elle se trouve, son point de départ A, et son point d'arrivée B. Le point de départ A peut être entré par l'utilisateur dans un dispositif de navigation, soit donné ou confirmé par une borne d'identification radiofréquence, dite RFID, ou tout autre moyen de localisation absolue.
Les couloirs 1 du métro sont un exemple d'utilisation possible de l'invention.
L'utilisateur entre alors le point de départ A comme étant l'entrée de la station de métro dans laquelle il s'engage, cette entrée de station pouvant être confirmée par une borne RFID. L'utilisateur indique par ailleurs le point d'arrivée B, en l'occurrence la station de métro à laquelle il veut se rendre.
Le logiciel de navigation calcule alors le chemin à suivre par l'utilisateur.
Dans l'exemple de la figure 1, le logiciel de navigation commence par chercher la ligne de métro à emprunter et repère le quai sur lequel la personne doit se rendre. Puis il calcule le chemin à prendre par l'utilisateur. Le système possède une cartographie des lieux dans lesquels l'utilisateur va évoluer. L'IHM indique à l'utilisateur les directions à suivre et les points clés qu'il va rencontrer. Il indique par exemple qu'à 200 mètres du départ il y aura un escalier 2 et qu'en bas de l'escalier il faut prendre un virage à 90° à droite. Le système permet de suivre l'évolution de l'utilisateur par rapport à la cartographie afin de lui indiquer correctement les directions à suivre en fonction de l'endroit où il se trouve. A cet effet, le système met en oeuvre le processus illustré par les étapes de la figure 2.
La figure 2 illustre donc trois étapes possibles appliquées par un système selon l'invention. Dans une étape 21 d'estimation d'avance, il s'agit d'une estimation de déplacement en trois dimensions, 3D. Cette estimation est obtenue à partir de capteurs portés par l'utilisateur, tels que par exemple des accéléromètres, des gyromètres, un magnétomètre ou encore un baromètre. Au cours de la progression du déplacement de l'utilisateur, le système peut, régulièrement ou non, réorienter l'utilisateur s'il détecte une dérive de cap ou d'avance par rapport à l'objectif fixé.
A partir de l'estimation de déplacement 3D obtenue à partir des capteurs, le système de localisation effectue par exemple un recalage par rapport à la carte afin de supprimer les erreurs de positionnement latérales dues aux dérives des capteurs. En particulier dans l'exemple de la figure 1, si l'estimation positionne l'utilisateur à l'intérieur d'un mur, le système recale l'utilisateur au milieu du couloir 1 en conservant l'estimation d'avance le long de la trajectoire.
Dans une étape suivante 22, le système procède à l'identification de l'objectif atteint. L'estimation d'avance obtenue dérive en fait dans le temps par accumulation d'erreur à chaque pas de l'utilisateur. Il est donc nécessaire de relocaliser régulièrement celui-ci sur une carte de lieux. Le système cherche alors à identifier que l'objectif indiqué a été atteint. Deux modes d'identification peuvent par exemple être utilisés :
- un mode, qui ne fait pas partie de l'invention revendiquée, utilise la perception de l'utilisateur qui indique que l'objectif est atteint en envoyant au dispositif de navigation une information, par exemple du type « clic » ;
- un autre mode est basé sur la reconnaissance de l'objectif à partir de la signature des signaux provenant des capteurs.
Dans ces deux cas, le dispositif de navigation donne, une fois l'objectif atteint, un nouvel objectif à atteindre. Tous ces objectifs sont en fait des objectifs intermédiaires situés entre le point de départ A et le point d'arrivée B. La reconnaissance du franchissement d'un objectif peut se faire par exemple par une mesure d'un changement de cap, tel qu'un changement de couloir notamment, par une estimation de montée ou de descente dans le cas d'un escalier, par une identification d'un déplacement sans mouvement de la personne, lorsqu'elle est notamment dans une rame de métro ou encore dans un mode, qui ne fait pas partie de l'invention revendiquée, par une indication de la personne à l'IHM.
Une autre étape 23 concerne les cas de perte de localisation de l'utilisateur. Ces cas de perte de localisation peuvent survenir en particulier dans des endroits extrêmement difficiles où il y a par exemple une présence de foule ou à l'intérieur de très grands halls.
A partir des dernières mesures reçues et de données que peut fournir l'utilisateur telles que par exemple des informations sur la présence d'un couloir ou d'un portillon, le système peut effectuer un calcul probabiliste des positions les plus probables, autres que celle définie initialement et peut alors proposer une solution alternative pour atteindre l'objectif défini.
La figure 3 illustre un enchaînement possible des étapes 21, 22, 23 précédemment décrites, qui peuvent se suivre selon un processus itératif en fonction du renouvellement des objectifs à atteindre tout au long du parcours.
Dans un premier temps 31 l'objectif à atteindre est présenté. Puis dans la première étape 21 le système effectue l'estimation du déplacement ainsi que la correction éventuelle de la trajectoire. Dans l'étape suivante 22 selon que l'objectif est atteint ou non, plusieurs actions sont possibles. Si l'objectif est atteint un nouvel objectif à atteindre est présenté 31. Si l'objectif n'est pas atteint une estimation probabiliste 32 de la position est effectuée puis un nouvel objectif à atteindre est présenté.

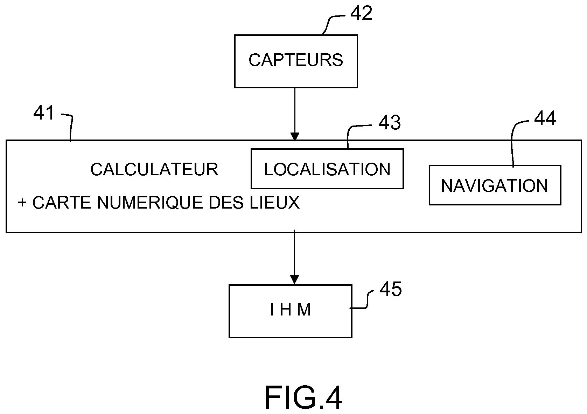

La figure 4 présente les différents blocs fonctionnels possibles d'un système selon l'invention tel que décrit précédemment. Le dispositif comprend un calculateur 41 porté par exemple au niveau de la ceinture de l'utilisateur et des capteurs 42, répartis sur le corps de l'utilisateur. Chaque capteur 42 peut représenter un ensemble de capteurs centralisés à un endroit particulier du corps.
Le calculateur 41 peut être relié par une liaison bidirectionelle à une IHM 45 destinée notamment à la saisie de données en entrée, en particulier pour la saisie du point de départ et du point d'arrivée, ainsi que pour la saisie de repères intermédiaires par exemple. L'IHM est par exemple aussi destinée à la présentation d'informations en sortie provenant du calculateur 41 telles que notamment des indications du chemin planifié, des distances ou des changements de direction. Ces informations peuvent être délivrées sous forme sonore, visuelle ou tactile.
Le calculateur comporte en mémoire une cartographie numérique, 2D ou 3D, des lieux dans lequel le déplacement de l'utilisateur est prévu.
Le calculateur comporte par ailleurs en mémoire le programme de localisation comprenant un système de traitement des signaux provenant des capteurs 42, et de l'IHM, ainsi par exemple qu'un système informatique qui effectue la fusion des données entre la cartographie et les informations issues des capteurs et de l'IHM, ce système calculant à partir de ces données la localisation absolue instantanée de l'utilisateur, c'est-à-dire la position de l'utilisateur référencée par rapport à la carte. Il comporte également un programme de navigation 44 effectuant la planification du chemin à parcourir à partir du point d'arrivée et de la position de l'utilisateur référencée par rapport à la carte.
Les capteurs 42, sont reliés au calculateur.
Ces capteurs 42, sont des centrales inertielles, une centrale inertielle pouvant dans ce cas être l'association de 3 gyromètres et de 3 accéléromètres. Ces centrales inertielles donnent des informations d'accélération et de vitesse de rotation, mais pas d'informations de position. Le système doit donc déterminer la position de l'utilisateur à partir des données fournies par ces capteurs. Le dispositif peut par ailleurs comporter d'autres types de capteurs tel qu'un baromètre et/ou un magnétomètre, ces capteurs étant situés par exemple dans le même boîtier que celui qui comporte le calculateur.
Pour définir la position de l'utilisateur, une simple intégration des vitesses et accélérations données par les capteurs n'est pas suffisante car la position ainsi calculée dérive rapidement. Le système permet donc de recaler régulièrement la position calculée de l'utilisateur. A cet effet, le système utilise par exemple :
- la signature de signaux au franchissement des points clés du trajet tels que par exemple les escaliers, changement de direction ;
- les informations données par l'utilisateur, par exemple lors des franchissements des barrières du métro.
- la détection des pas
Une IHM peut être utilisée pour saisir des données d'entrée et présenter des informations en sortie. Cette IHM peut utiliser des signaux sensoriels, par exemple sonores ou tactiles et/ou visuels. L'interface est choisie par exemple pour respecter des règles qui peuvent être importantes comme ne pas masquer, altérer ou perturber des indices sonores, haptiques, olfactifs ou thermiques habituellement exploités par les utilisateurs. L'IHM doit par ailleurs de préférence ne communiquer que ce qui est utile à l'instant opportun sans générer d'erreurs ni d'abaissement du niveau de vigilance.
En ce qui concerne la cartographie des lieux, les plans 3D du métro par exemple existent déjà et les plans des bâtiments ou lieux publics sont relativement simples à réaliser en 3D, ou en 2D si on se limite aux déplacements sur un seul étage.
Pour les opérations de navigation, des algorithmes standards peuvent être utilisés.
L'invention permet avantageusement d'effectuer l'intégration dans un même dispositif d'un ensemble de variables provenant de capteurs, de l'utilisateur et d'une cartographie pré-enregistrée, et utilise la fusion de données issues des capteurs et des renseignements donnés par l'utilisateur avec la cartographie. La fusion des données issues des capteurs est par exemple effectuée en permanence. Les logiciels de localisation et navigation implantés dans le système prenent en compte les informations issues des capteurs, les informations données par l'utilisateur et les informations de cartographie, et à partir de ces informations il délivre les informations pour le chemin à suivre.

Avantageusement, un dispositif selon l'invention ne demande pas d'équipements complémentaires des bâtiments traversés. Il est par ailleurs discret, facile à porter et léger. Il est adaptable à tous les lieux cartographiés au préalable. Il utilise des capteurs miniaturisés et à faible coût. Il est particulièrement adapté aux personnes malvoyantes mais il peut aussi être utilisé par des personnes valides.

## Revendications

1. Dispositif d'assistance à la navigation d'une personne, ledit dispositif équipant ladite personne et comportant au moins :
- un calculateur (41) comprenant en mémoire une cartographie numérique du lieu (1) dans lequel le trajet de la personne est prévu entre un point de départ (A) donné par un moyen de localisation absolue et un point d'arrivée (B), et un programme de localisation ;
- une interface homme-machine (45) reliée au calculateur (41) ladite interface étant apte à indiquer à la personne les directions à suivre et les objectifs intermédiaires qu'elle va rencontrer;
- un ensemble de capteurs (42) de type centrales inertielles, portés par la personne, reliés au calculateur, les capteurs délivrant des informations sur les mouvements de la personne et de sa position dans ladite cartographie ;
**caractérisé en ce que** le programme de localisation (43) est apte à effectuer un traitement des signaux provenant des capteurs (42) et de l'interface homme-machine (45), et à effectuer la fusion des données fournies par la cartographie et les informations issues des capteurs portés par ladite personne et de l'interface, puis à calculer à partir de ces données la localisation de la personne, ledit calculateur (41) comportant un programme de navigation, ledit programme de navigation étant apte à calculer le trajet à parcourir par la personne entre le point de départ (A) et le point d'arrivée (B) et à fournir les informations nécessaires à la navigation de la personne à l'aide de l'interface homme-machine, le calcul du trajet à parcourir étant mis à jour en fonction d'objectifs intermédiaires atteints identifiées entre le point de départ (A) et le point d'arrivée (B), ces objectifs intermédiaires étant repérés dans ladite cartographie, de telle sorte qu'une fois qu'un objectif intermédiaire est atteint un nouvel objectif intermédiaire à atteindre est présenté par l'interface à la personne, un objectif intermédiaire atteint étant identifié par un mouvement caractéristique de ladite personne détecté par au moins un desdits capteurs (42).

2. Dispositif selon l'une quelconque des revendications précédentes, **caractérisé en ce qu'**une centrale inertielle est composée de l'association de trois gyromètres et de trois accéléromètres.

3. Dispositif selon l'une quelconque des revendications précédentes, **caractérisé en ce que** la détection du mouvement est effectuée au moyen de la signature d'un signal du capteur, ledit signal identifiant le mouvement caractéristique de la personne.

4. Dispositif selon l'une quelconque des revendications précédentes, **caractérisé en ce qu'**il est configuré pour mettre en oeuvre un processus itératif en fonction du renouvellement des objectifs intermédiaires à atteindre tout au long du trajet,
- l'objectif à atteindre étant défini (31) ;
- dans une première étape (21) l'estimation du trajet ainsi que la correction éventuelle de la trajectoire sont calculés ;
- dans l'étape suivante (22), si l'objectif est atteint un nouvel objectif à atteindre est défini (31), si l'objectif n'est pas atteint une estimation probabiliste (32), à partir de l'historique des positions, de la position est effectuée puis un nouvel objectif à atteindre est défini (31).

## Patentansprüche

1. Vorrichtung zum Assistieren einer Person beim Navigieren, wobei die Person mit der Vorrichtung ausgestattet ist, die Folgendes umfasst:
- einen Rechner (41), in dessen Speicher sich eine digitale Karte des Orts (1), an dem die Route der Person zwischen einem von einem absoluten Ortungsmittel gegebenen Ausgangspunkt (A) und einem Ankunftspunkt (B) vorgesehen ist, und ein Ortungsprogramm befinden;
- eine mit dem Rechner (41) verbundene Mensch-Maschine-Schnittstelle (45), wobei die Schnittstelle der Person die zu verfolgenden Richtungen und die dabei anzutreffenden Zwischenziele anzeigen kann;
- einen Satz von von der Person getragenen und mit dem Rechner verbundenen Sensoren (42) des Typs Trägheitszentrale, wobei die Sensoren Informationen über die Bewegungen der Person und ihre Position in der Karte liefern;
**dadurch gekennzeichnet, dass** das Ortungsprogramm (43) Folgendes bewirken kann: die Verarbeitung der Signale, die von den Sensoren (42) und der Mensch-Maschine-Schnittstelle (45) kommen, und die Fusion von Daten, die von der Karte geliefert werden, und der Informationen, die von den von der Person getragenen Sensoren und von der Schnittstelle kommen, dann Berechnen, auf der Basis dieser Ortungsdaten, der Position der Person, wobei der Rechner (41) ein Navigationsprogramm umfasst, wobei das Navigationsprogramm die Route berechnen kann, die von der Person zwischen dem Ausgangspunkt (A) und dem Ankunftspunkt (B) zu durchlaufen ist, und die Informationen liefern kann, die für die Navigation der Person mit Hilfe der Mensch-Maschine-Schnittstelle notwendig sind, wobei die Berechnung der zu durchlaufenden Route in Abhängigkeit von erreichten Zwischenzielen aktualisiert wird, die zwischen dem Ausgangspunkt (A) und dem Ankunftspunkt (B) identifiziert werden,
wobei diese Zwischenziele in der Karte gekennzeichnet sind, so dass die Schnittstelle der Person nach dem Erreichen eines Zwischenziels ein neues zu erreichendes Zwischenziel präsentiert, wobei das Erreichen eines Zwischenziels durch eine von wenigstens einem der Sensoren (42) erkannte charakteristische Bewegung der Person identifiziert wird.

2. Vorrichtung nach einem der vorherigen Ansprüche, **dadurch gekennzeichnet, dass** sich eine Trägheitszentrale aus der Assoziation von drei Gyrometern und von drei Beschleunigungsmessern zusammensetzt.

3. Vorrichtung nach einem der vorherigen Ansprüche, **dadurch gekennzeichnet, dass** die Erkennung der Bewegung mittels der Signatur eines Signals des Sensors ausgeführt wird, wobei das Signal die charakteristische Bewegung der Person identifiziert.

4. Vorrichtung nach einem der vorherigen Ansprüche, **dadurch gekennzeichnet, dass** sie so konfiguriert ist, dass sie einen iterativen Prozess in Abhängigkeit von der Erneuerung der entlang der Route zu erreichenden Zwischenziele implementiert,
- wobei das zu erreichende Ziel definiert wird (31);
- in einem ersten Schritt (21) die Schätzung der Route sowie die eventuelle Korrektur der Route berechnet werden;
- im nachfolgenden Schritt (22), wenn das Ziel erreicht wird, ein neues zu erreichendes Ziel definiert wird (31), wenn das Ziel nicht erreicht wird, eine probabilistische Schätzung (32), auf der Basis der Historie von Positionen, der Position ausgeführt wird, dann ein neues zu erreichendes Ziel definiert wird (31).

## Claims

1. Device for assisting the navigation of a person, the device being fitted to the person and comprising at least:
- a processor (41) which comprises in the memory a digital map of the location (1) in which the path of the person is provided between a departure point (A) specified by an absolute location means and an arrival point (B), and a location programme;
- a man/machine interface (45) which is connected to the processor (41), the interface being capable of indicating to the person the directions to be followed and the intermediate objectives which the person will encounter;
- an assembly of sensors (42) of the inertial central type which are carried by the person and connected to the processor, the sensors providing information relating to the movements of the person and his position in the map;
**characterised in that** the location programme (43) is capable of carrying out a processing of the signals originating from the sensors (42) and the man/machine interface (45) and carrying out the combination of the data provided by the map and the information originating from the sensors carried by the person and the interface, then calculating from these data the location of the person, the processor (41) comprising a navigation programme, the navigation programme being capable of calculating the path to be travelled by the person between the departure point (A) and the arrival point (B) and providing the information necessary for the navigation of the person using the man/machine interface, the calculation of the path to be travelled being updated in accordance with identified intermediate objectives reached between the departure point (A) and the arrival point (B),
these intermediate objectives being referenced in the map in such a manner that, once an intermediate objective is reached, a new intermediate objective to be reached is presented by the interface to the person, an intermediate objective reached being identified by a characteristic movement of the person detected by at least one of the sensors (42).

2. Device according to either of the preceding claims, **characterised in that** an inertial unit is composed of the association of three gyrometers and three accelerometers.

3. Device according to either of the preceding claims, **characterised in that** the detection of the movement is carried out using the signature of a signal of the sensor, the signal identifying the characteristic movement of the person.

4. Device according to any one of the preceding claims, **characterised in that** it is configured to implement an iterative process in accordance with the renewal of the intermediate objectives to be reached along the path,
- the objective to be reached being defined (31);
- in a first step (21) the estimation of the path and the potential correction of the trajectory are calculated;
- in the following step (22), if the objective is reached, a new objective to be reached is defined (31), if the objective is not reached, a probabilistic estimation (32) of the position is carried out based on the history of the positions, then a new objective to be reached is defined (31).
